# FASCICULE DE BREVET EUROPEEN

(11) **EP 2 125 401 B1**
(45) Date de publication et mention de la délivrance du brevet: **26.05.2010**
(21) Numéro de dépôt: 08761949.0
(22) Date de dépôt: 18.01.2008
(51) Int. Cl.: B60H 1/00, B60H 1/32

(54) **SYSTEME D'INSONORISATION DESTINE AUX EVACUATIONS DES CONDENSATS D'UN CLIMATISEUR DE VEHICULE AUTOMOBILE**
SCHALLDÄMPFUNGSSYSTEM FÜR KONDENSATABFÜHRUNG IN DER KLIMAANLAGE EINES KRAFTFAHRZEUGS
SOUND PROOFING SYSTEM FOR CONDENSATE DISCHARGE IN THE AIR CONDITIONING SYSTEM OF AN AUTOMOTIVE VEHICLE

(30) Priorité: 31.01.2007 FR 0752992
(43) Date de publication de la demande: 02.12.2009
(73) Titulaire: Peugeot Citroën Automobiles SA, 78140 Vélizy-Villacoublay (FR)
(72) Inventeur: PRUNET, Jean-Baptiste, F-Belfort 90000 (FR); TOULERON, Damien, F-25260 Saint Maurice Colombier (FR); MILLARD, Yrieix, F-25200 Montbeliard (FR)
(74) Mandataire: Fernandez, Francis Lionel
(86) Numéro de dépôt international: PCT/FR2008/050080
(87) Numéro de publication internationale: WO 2008/099120

(56) Documents cités:
- DE-A1- 19 637 408
- DE-A1- 19 940 286
- FR-A1- 2 624 809
- GB-A- 2 240 856

## Description

La présente invention concerne un système d'insonorisation, destiné aux évacuations des condensats d'un climatiseur de véhicule automobile.

Une évacuation de condensats d'un climatiseur est essentiellement une tubulure de vidange, qui relie le corps creux du carter du climatiseur à l'extérieur et permet d'évacuer les vapeurs, essentiellement les vapeurs d'eau, contenues initialement dans l'air et condensées ensuite sur l'évaporateur en phase de refroidissement de l'air injecté dans le véhicule.

La tubulure restant ouverte en permanence, une quantité importante de bruit extérieur remonte à l'intérieur du corps creux du carter de climatiseur. Ce bruit remonte jusqu'aux oreilles des passagers du véhicule par les aérateurs et par transparence des parois du système de climatisation.

Il y a nécessité de réduire ce bruit, de façon à améliorer le confort des passagers. Pour réduire la propagation d'ondes acoustiques, il est courant d'interposer des obstacles sur le trajet des ondes. Toutefois, dans les systèmes de climatisation, il faut s'assurer que ces obstacles ne deviennent pas une cause d'obturation de la tubulure avec des corps étrangers et des accumulations de poussières. Pour cette raison, la réduction des bruits des évacuations des condensats de climatisation de véhicule automobile présente une certaine complexité.

On connaît des solutions techniques qui contribuent à améliorer, par exemple, l'insonorisation de certaines évacuations d'eau dans les véhicules automobiles.

Ainsi, on connaît des circuits d'évacuation d'eau qui comportent une chicane d'atténuation du son par barrière. Cette chicane confère à ces circuits une forme en « U », qui contribue à la limitation du bruit.

D'autres types d'évacuation ont une forme qui obture la tubulure en sortie, avec un opercule qui est fendu en quatre pétales. Ces systèmes d'évacuation ont une efficacité limitée, et se bouchent en environnement poussiéreux.

On connaît également, selon la demande de brevet d'invention français n° 2 624 809, un dispositif d'évacuation d'eau à travers une cloison délimitant un habitacle de véhicule, qui comprend essentiellement un tuyau débouchant dans un réservoir qui obture, de façon étanche, une ouverture pratiquée dans ladite cloison et qui comporte un orifice d'évacuation positionné plus haut que l'extrémité débouchant du tuyau dans le réservoir, de façon à assurer la retenue d'un certain volume d'eau, étanche aux bruits, entre l'orifice et l'extrémité du tuyau.

Tous ces circuits et systèmes d'évacuation d'eau de l'art antérieur ont une efficacité limitée, se bouchent en environnement poussiéreux, ou en cas de gel.

On connaît aussi, selon la demande de brevet d'invention français n° 2 870 166, un dispositif de clapet d'obturation pour boîte à eau de véhicule automobile, la boîte à eau étant formée d'un boîtier rigide et étanche recouvert d'un matériau isolant et pourvu d'un orifice d'évacuation d'eau. Le clapet comprend :
- un corps creux, sensiblement cylindrique, apte à être introduit dans l'orifice et fixé dans ce dernier par des moyens de fixation, le corps creux comportant une bouche inerte d'évacuation d'eau,
- une bague souple d'étanchéité, montée de manière étanche autour d'une extrémité du corps creux, pourvue d'au moins deux lèvres d'étanchéité, destinées à assurer l'étanchéité avec le boîtier rigide et le matériau isolant respectivement, et
- un volet d'obturation pourvu d'une masselotte, articulé par rapport à la bouche interne et apte à venir en appui étanche contre le bord périphérique aval de la bouche interne.

Ce dispositif permet un débit assez faible et présente des risques de colmatage. Par ailleurs, avec le vieillissement, le clapet présente un risque de perte en fermeté d'obturation.

Le but de la présente invention est de fournir un système d'insonorisation destiné aux évacuations des condensats d'un climatiseur de véhicule automobile, qui permette d'obvier aux inconvénients des systèmes d'évacuation d'eau précités de l'art antérieur, en offrant, de manière efficace, une atténuation importante du bruit provenant de l'extérieur.

Un autre but de la présente invention est de fournir un tel système, qui soit de conception simple, de montage aisé, robuste, fiable et économique.

Pour parvenir à ces buts, la présente invention conçoit un nouveau système d'insonorisation destiné aux évacuations des condensats d'un climatiseur de véhicule automobile, placé entre l'évaporateur du climatiseur et la sortie des condensats sur l'extérieur, constitué d'un ensemble de parois, de façon à créer un chemin de type labyrinthe qui, dans un espace relativement compact, fait suivre un trajet relativement long aux ondes acoustiques du bruit provenant de l'extérieur du bruit provenant de l'extérieur par ladite sortie des condensats, lesdites parois étant des parois circulaires ajourées concentriques.

Selon un premier mode de réalisation de l'invention, le système d'insonorisation est intégré au corps creux du carter du climatiseur, dans la partie inférieure dudit carter.

De préférence, les parois sont recouvertes par un couvercle, qui est revêtu sur sa face interne d'un matériau absorbant acoustique.

De préférence également, le matériau absorbant acoustique est un matériau hydrophobe.

Selon un mode préféré de réalisation également, le système est constitué :
- d'une partie supérieure comprenant le couvercle revêtu d'une couche de matériau absorbant et la paroi circulaire ajourée de plus grand diamètre, et
- d'une partie inférieure, liée au carter du climatiseur, comprenant les autres parois circulaires ajourées concentriques et l'orifice d'évacuation des condensats vers l'extérieur.

De préférence, le nombre de parois circulaires ajourées concentriques est de quatre.

En variante, le nombre de parois circulaires ajourées concentriques est de trois.

De manière préférentielle, il est prévu, de plus, un ou plusieurs revêtements absorbants complémentaires à l'intérieur du carter du climatiseur, de façon à améliorer le système d'isolation acoustique, en absorbant le maximum d'ondes réfléchies.

Selon d'autres modes de réalisation de l'invention, le système d'insonorisation est intégré à un boîtier spécifique situé hors du carter du climatiseur, ledit boîtier étant relié audit carter par une tubulure de raccordement.

Et de préférence, il est constitué :
- d'une partie supérieure - ou couvercle - dont la surface interne est revêtue d'une couche de matériau absorbant hydrophobe, et
- d'une partie inférieure comprenant un orifice de sortie des condensats et un ensemble de parois disposées les unes par rapport aux autres de façon à former un chemin de type labyrinthe qui, dans un espace relativement compact, fait suivre un trajet relativement long aux ondes acoustiques du bruit provenant de l'extérieur par l'orifice de sortie des condensats.

Quelque soit le mode de réalisation de l'invention, le système d'insonorisation peut être monté sur une tôle de plancher du véhicule par l'intermédiaire de joints d'étanchéité.

Quelque soit le mode de réalisation de l'invention également, le matériau absorbant acoustique hydrophobe peut être avantageusement un matériau à fibres de type Thinslate®.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue schématique, en coupe transversale, d'un carter de climatiseur avec un système d'insonorisation des évacuations des condensats selon un premier mode de réalisation de l'invention,
- la figure 2 est une vue schématique, en coupe transversale, du système d'insonorisation indiqué par la flèche II de la figure 1,
- la figure 3 est une vue éclatée, en perspective, du système d'insonorisation des figures 1 et 2,
- la figure 4 est une vue en perspective d'une variante de réalisation du système d'insonorisation de la présente invention,
- la figure 5 est une vue en perspective virtuelle de la variante de réalisation du système d'insonorisation de la figure 4, dans laquelle la partie supérieure du système est transparente pour mieux faire apparaître des caractéristiques internes du système,
- la figure 6 est une vue de dessus, schématique, du système d'insonorisation des figures 4 et 5,
- la figure 7 est une vue en coupe transversale du système d'insonorisation des figures 4 à 6,
- la figure 8 représente, de manière schématique et en perspective, la localisation de parties de carter du climatiseur revêtues d'une couche de matériau absorbant destinée à parfaire le système d'insonorisation des évacuations des condensats,
- la figure 9 représente, de manière schématique et en coupe transversale, le carter de climatiseur de la figure 8 avec la localisation de parties de carter revêtues d'une couche de matériau absorbant,
- la figure 10 est un ensemble de graphes qui illustrent l'efficacité acoustique de deux solutions techniques d'insonorisation conforme à la présente invention, par rapport à différentes solutions techniques classiques qui ne recourent pas au principe de l'invention,
- la figure 11 est une vue en perspective d'un autre mode de réalisation de l'invention, dans lequel le système d'insonorisation n'est pas intégré au corps creux du carter de climatiseur, mais déporté vers un boîtier spécifique hors du carter,
- la figure 12 est une vue en perspective, de la partie inférieure du système d'insonorisation à boîtier spécifique de la figure 10,
- la figure 13 est une vue en perspective, de la partie supérieure du système d'insonorisation à boîtier spécifique des figures 10 et 11,
- la figure 14 est une vue en coupe transversale, schématique, du boîtier contenant le système d'insonorisation des figures 11 et 12, en position montée,
- la figure 15 est un ensemble de graphes qui illustrent l'efficacité acoustique de la solution technique d'insonorisation conforme au mode de réalisation à boîtier spécifique des figures 11 à 14, par rapport à différentes solutions techniques classiques qui ne recourent pas au principe de l'invention.

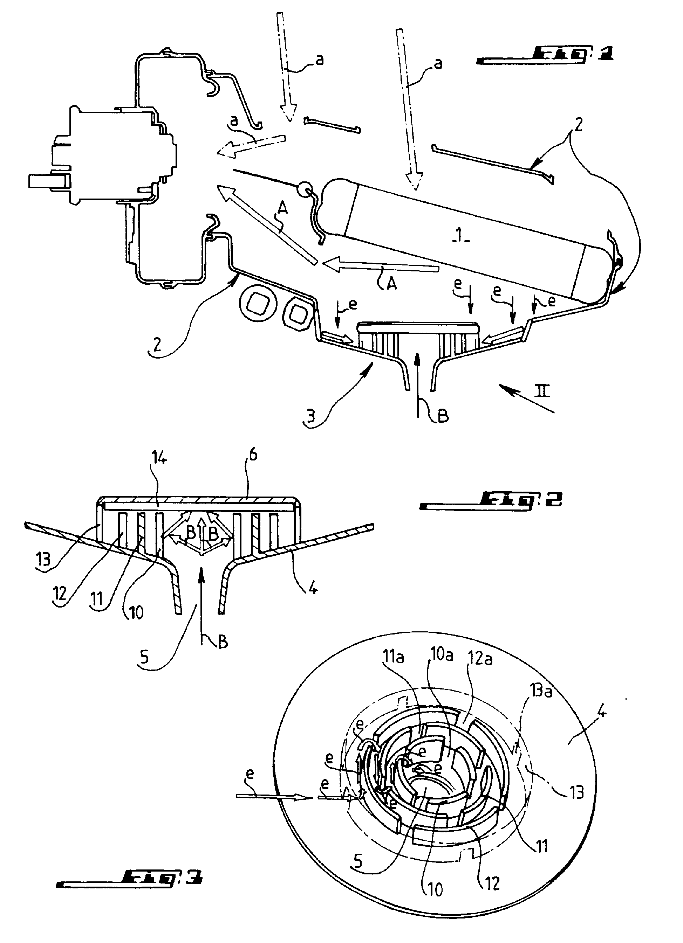

En référence au dessin de la figure 1, un climatiseur de véhicule automobile comprend un corps creux de carter 2, dans lequel se trouve un évaporateur 1. A la partie inférieure du carter 2, désignée 3 de manière générale, se trouve un orifice de sortie du climatiseur, qui relie le corps creux du carter 2 à l'extérieur.

L'air ambiant (flèches « a » en traits interrompus mixtes sur la figure 1) est refroidi par l'évaporateur 1 d'où sort de l'air réfrigéré (flèches « A » en traits pleins) et des gouttelettes d'eau condensée qui tombent, illustrées par les flèches « e » dirigées vers le bas. La flèche « B » illustre le mouvement de remontée du bruit extérieur vers le corps creux de carter 2.

Dans la partie inférieure 3 est placé le système d'insonorisation destiné aux évacuations des condensats du climatiseur, qui sont ici des gouttes d'eau condensée (flèches « e »). Un premier exemple de réalisation de ce système d'insonorisation est mieux représenté sur les dessins des figures 2 et 3.

Le système d'insonorisation est constitué de plusieurs parois de labyrinthe 10, 11, 12, 13, de symétrie circulaire et concentriques, qui forment une chambre qui emprisonne les réflexions du bruit - illustré par les flèches « B » de la figure 2 - issu de la route du fait de la symétrie du système. Le bruit B remonte de l'extérieur par l'orifice 5 de sortie des condensats formé dans la paroi inférieure 4 du carter 2. Pour atténuer plus rapidement encore le niveau sonore dans le labyrinthe, il a été placé une capsule 14 de matériau absorbant acoustique, de type hydrophobe, en partie supérieure du labyrinthe et donc hors écoulement principal. Cette capsule 14 est placée sur la surface interne d'un couvercle 6 du système d'insonorisation. A titre d'exemple non limitatif de l'objet et de la portée de la présente invention, cette capsule absorbante acoustique hydrophobe 14 peut être un revêtement de Thinslate ® mis sur le marché sous la référence TAI 2001. Le thinsulate ® est une fibre mise au point par la société 3M, qui possède une grande surface qui emprisonne l'air chaud, et qui est, par conséquent, plus efficace que les autres isolants plus volumineux incluant le duvet.

Chaque paroi circulaire - ou rang concentrique - du labyrinthe 10, 11, 12, 13, présente des passages, par exemple 10a, 11a, 12a, 13a, lesquels sont toujours en décalage radial sur deux rangs adjacents de façon à créer un chemin de labyrinthe.

Le système de labyrinthe laisse s'écouler l'eau condensée selon le chemin labyrinthique, illustré par les flèches « e » de la figure 3. L'eau s'écoule vers l'extérieur par l'orifice de sortie d'eau, de référence 5.

Les parois concentriques ajourées 10, 11, 12 sont monobloc avec le fond 4 ou partie inférieure du système, tandis que la paroi ajourée 13, de plus grand diamètre, est monobloc avec le couvercle 6 du système d'insonorisation.

Le système, tel que décrit ci-dessus, assume deux fonctions acoustiques associées :
- il offre un chemin de propagation acoustique conçu de manière à être le plus long possible dans un volume le plus petit possible, qui constitue un conduit d'évacuation de géométrie à caractère fortement tortueux. La disposition « labyrinthique » permet d'organiser les réflexions des ondes acoustiques B, en provoquant le retour d'une partie importante de ces ondes vers leur source. Les nombreuses parois disposées provoquent des réflexions multiples qui permettent, à chaque réflexion, une atténuation de la pression acoustique par absorption sur la paroi avant transmission du bruit résiduel au corps creux du carter 2 de climatiseur.
- il offre une surface optimale d'absorption grâce à l'application du matériau absorbant acoustique hydrophobe, disposé sur une ou plusieurs parois du système (non en contact avec l'écoulement des eaux condensées), et conçu avec une surface maximale. Les propriétés hydrophobes de ce matériau lui permettent de ne pas se dégrader dans le temps et les propriétés acoustiques de l'absorbant du système d'évacuation d'eau condensée restent préservées dans le temps. Ces matériaux sont stables dans le temps, y compris en ce qui concerne d'éventuels problèmes d'odeurs, parce qu'il n'y a pas de pourrissement des fibres constitutives du matériau.

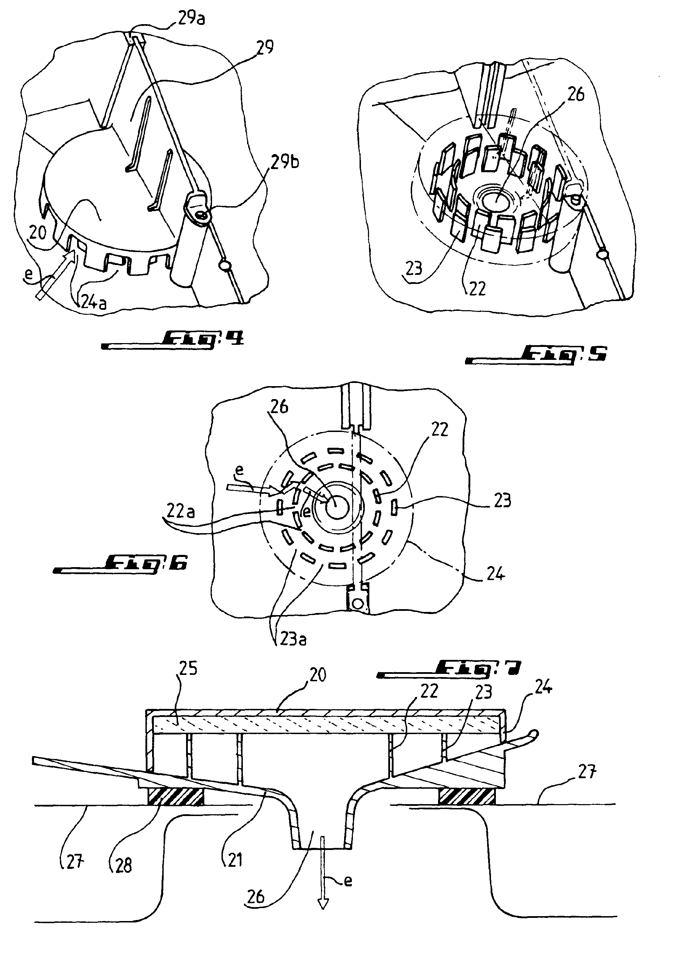

On a représenté sur le dessin des figures 4 à 7, une variante de réalisation du système d'insonorisation selon la présente invention décrit précédemment.

Le système comporte une partie supérieure ou couvercle, de référence 20, et une partie inférieure 21 liée au carter du climatiseur. Les deux parties du système comportent différentes parois et forment un labyrinthe à trois rangs concentriques : les rangs 22, 23, de la partie de carter et le rang 24 constitué par la partie latérale externe en retour du couvercle 20. Chaque rang concentrique du labyrinthe 22, 23, 24, présente des passages, par exemple 22a, 23a (figure 6) et 24a (figure 4), lesquels sont toujours en décalage radial sur deux rangs adjacents de façon à créer le chemin de labyrinthe le plus long possible dans l'espace le plus compact possible.

Pour atténuer plus rapidement encore le niveau sonore dans le labyrinthe, il est prévu, comme dans le mode de réalisation décrit précédemment, une capsule 25 de matériau absorbant acoustique, de type hydrophobe, en partie supérieure du labyrinthe et donc hors écoulement principal. Cette capsule 25 est placée sur la surface interne du couvercle 20. A titre d'exemple non limitatif de l'objet et de la portée de la présente invention, cette capsule absorbante acoustique hydrophobe 25 peut être un revêtement de Thinslate ® déjà mentionné ci-dessus ou d'un matériau similaire de la société américaine Federal-Mogul, ou de tout autre matériau équivalent.

Les flèches désignées « e » de la figure 6 représentent le trajet tortueux des eaux condensées, qui cheminent dans le labyrinthe et s'écoulent du système vers l'extérieur par l'orifice 26 en entonnoir selon la flèche également « e » de la figure 7.

Le système peut être monté sur le corps creux de carter 2 par un moyen amovible de type paroi 29 (figure 4), monobloc avec le couvercle 20 du système, et positionné dans des glissières 29a et 29b, fixes, du carter.

Le système est monté sur la tôle de plancher 27 du véhicule automobile par l'intermédiaire de joints d'étanchéité 28 fixés sur la tôle de plancher 27.

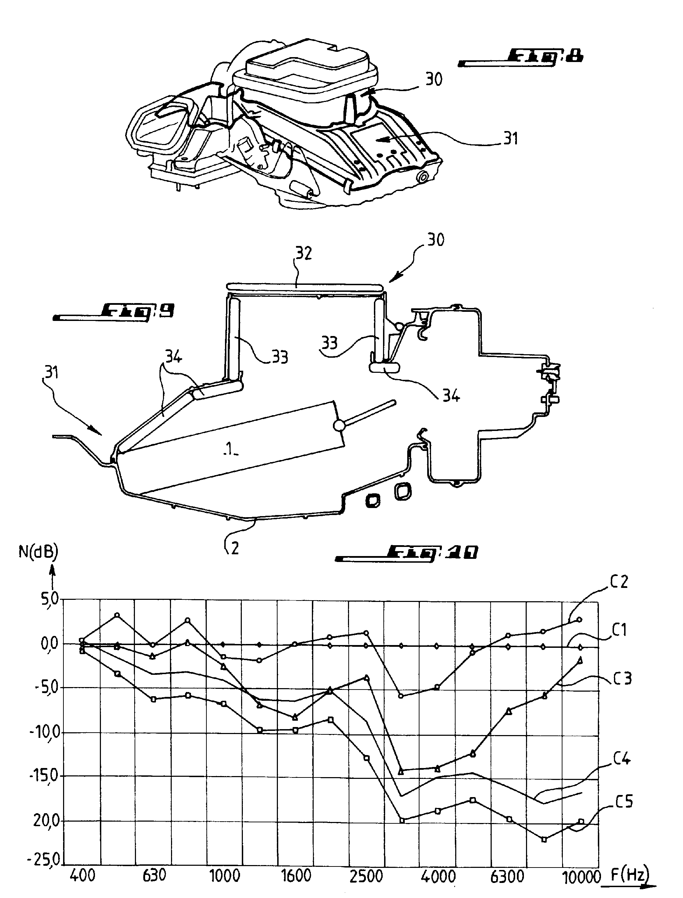

Les figures 8 et 9 représentent la localisation de traitements complémentaires absorbants, qui sont disposés sur des parois du carter 2 de climatisation et qui permettent de parfaire le système d'isolation acoustique. Le revêtement absorbant acoustique peut être une couche 33 disposée sur la périphérie interne de la cheminée d'entrée d'air 30, ou un revêtement 34 à l'intérieur du carter supérieur 31. Il peut également être prévu un filtre de protection 32 contre les poussières, miettes et particules, disposé sur la partie supérieure de la cheminée d'entrée d'air 30. Comme déjà mentionné précédemment, l'absorbant acoustique peut être un revêtement de Thinslate ® ou de matériau équivalent, connu en soi. A titre d'exemple non limitatif de la portée de la présente invention, le revêtement 33 à l'intérieur de la cheminée d'entrée d'air 30 peut être un revêtement de Thinslate®, de référence AU 3002-2 de la société 3M, de classe 4, d'épaisseur 19 mm et de densité de 18,7 kg/m3, et le revêtement 34 à l'intérieur du carter supérieur 31 peut être un revêtement de Thinslate® également, de référence TAI 2001 de la société 3M, de classe 2+, d'épaisseur 11 mm et de densité de 22,3 kg/m3 .

On a représenté sur la figure 10 un ensemble de graphes qui illustrent l'efficacité acoustique de deux solutions techniques d'insonorisation conforme à la présente invention, par rapport à différentes solutions techniques classiques qui ne recourent pas au principe de l'invention.

Les courbes représentent, pour des systèmes d'insonorisation structurés différemment, la perte par insertion en dB (gain d'isolation acoustique) mesurée en cabine d'isolation relativement à la tôle acier nue continue de 0,8 mm d'épaisseur pour les fréquences d'environ 400 Hz à environ 10 000 Hz.

La courbe C₁ se confond avec l'axe des abscisses par définition, puisqu'elle représente l'objectif tôle bouchée qui vient d'être défini.

La courbe C₅ correspond à un système à trou simple d'évacuation de diamètre 15 mm équivalent à une évacuation élémentaire dite grand diamètre. La courbe C₄ correspond à un système à trou simple d'évacuation de diamètre 10 mm équivalent à une évacuation élémentaire dite petit diamètre. La courbe C₃ correspond à un système à demi carter inférieur équipé du seul boîtier insonorisé, selon la présente invention décrite ci-dessus, tandis que la courbe C₂ correspond à un système à carter climatiseur complet équipé du boîtier insonorisé et d'absorbants complémentaires, selon le mode préféré de réalisation de l'invention, décrit également ci-dessus.

Ainsi, les courbes C₂ et C₃ illustrent l'efficacité acoustique des solutions techniques de la présente invention.

On notera que les conditions des mesures sont celles du climatiseur simplement fixé à la tôlerie du véhicule sans insonorisation.

La meilleure isolation acoustique est obtenue avec les systèmes conformes à la présente invention (courbes C₂, C₃), en particulier avec des gains très importants pour le système de climatiseur complet avec boîtier insonorisé et absorbants complémentaires (courbe C₂ positive sur toute l'échelle des fréquences, à l'exception d'un affaiblissement dans la zone des 3000-4000 Hz).

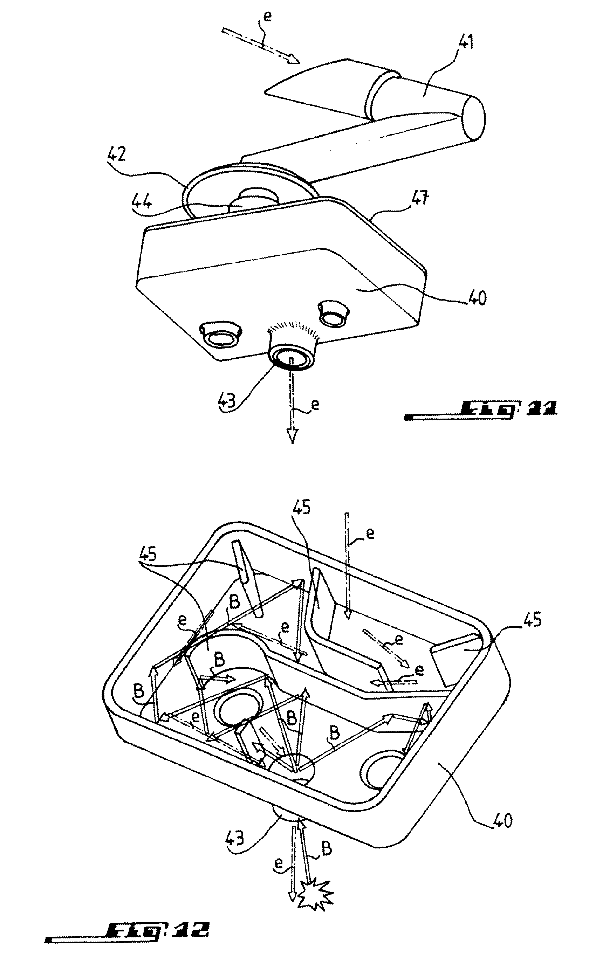

En variante des modes de réalisation décrits ci-dessus, le système d'insonorisation selon le principe de la présente invention, tel que représenté sur les figures 11 à 13, n'est plus intégré au corps creux du carter de climatiseur 2, mais est déporté vers un boîtier spécifique indépendant 40 - désigné aussi « traversée d'évacuation des eaux de condensats de climatiseur. L'eau, plus généralement les condensats, s'évacue indirectement du carter 2 vers l'extérieur par une tubulure de raccordement 41 reliant le carter 2 de climatiseur au boîtier 40 insonorisant.

La tubulure de raccordement 41 est équipée d'une collerette 42, qui permet de refermer le trou réalisé dans l'insonorisation et créé pour passer le tube 41.

L'eau condensée, dont le mouvement est représenté par les flèches « e » entraits interrompus mixtes, sort du boîtier 40 vers l'extérieur par l'orifice de sortie 43.

La structure interne du boîtier spécifique 40 est représentée sur le dessin de la figure 12. L'eau condensée (flèches « e ») entre dans le boîtier 40 par l'entrée d'eau 44 (figure 11), en provenance de la tubulure de raccordement 41. Le bruit externe (flèches B) remonte dans le boîtier 40 par l'orifice de sortie d'eau 43. La cavité intérieure du boîtier 40 est configurée avec des parois 45, qui forment ensemble un parcours tortueux et absorbant pour les ondes acoustiques du bruit B (flèches B en traits pleins) en provenance de l'extérieur par l'orifice 43, tout en laissant s'écouler en sens inverse l'eau condensée (flèches « e ») vers l'extérieur.

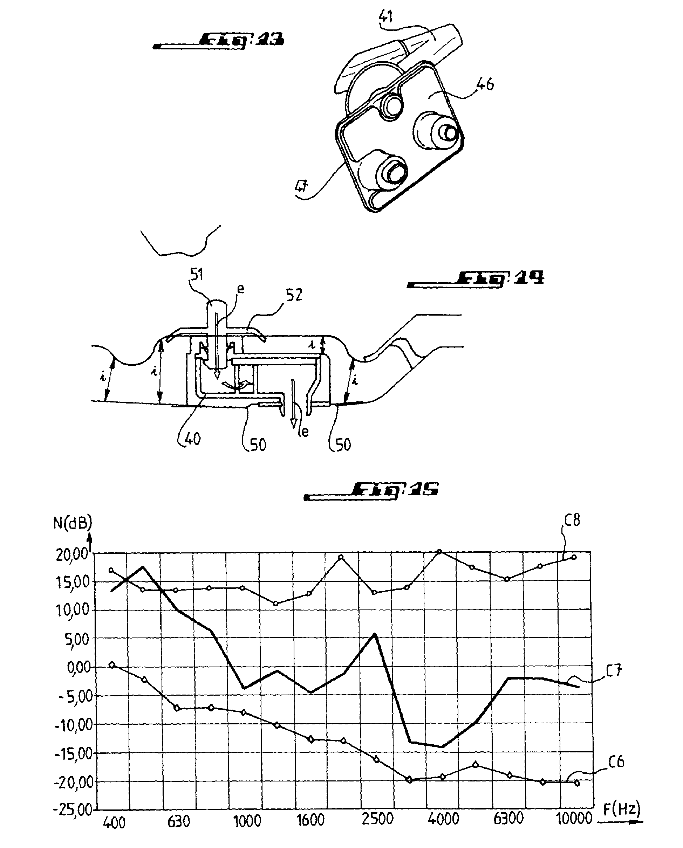

La figure 13 représente la disposition d'une couche d'absorbant acoustique 46 sur la face interne du couvercle 47 du boîtier 40, par conséquent dans la cavité du boîtier 40. Le revêtement 46 permet d'absorber une partie du bruit en provenance de l'extérieur.

En référence à la figure 14, le boîtier d'insonorisation 40 est représenté monté sur la tôle 50 du véhicule. Les flèches désignées « i » représentent l'épaisseur de la couche d'insonorisation acoustique qui recouvre la tôle 50 et le boîtier 40. Les flèches « e » illustrent le mouvement d'évacuation des condensats. La référence 51 désigne le raccord qui conduit l'eau condensée en provenance du carter de climatiseur, équipé de sa collerette 52 de fermeture de l'insonorisation semblable à la collerette 42 de la figure 11. Le raccord est également équipé d'une deuxième étanchéité à l'eau à la jonction du boîtier d'insonorisation 40.

La figure 15 est un ensemble de graphes qui illustrent l'efficacité acoustique de la solution technique d'insonorisation conforme au mode de réalisation à boîtier spécifique 40 des figures 11 à 14, par rapport à différentes solutions techniques classiques qui ne recourent pas au principe de l'invention.

La courbe C₆ correspond à un système à trou simple d'évacuation dans la tôle et dans l'insonorisation du véhicule. La courbe C₇ correspond à un système à boîtier « traversée » classique non bouché. La courbe C₈ correspond à un système d'insonorisation à boîtier spécifique 40 selon la présente invention, tel que décrit précédemment en regard des figures 11 à 13, mais dans une version non recouverte d'une couche d'isolation. Par conséquent, le système d'insonorisation des évacuations des condensats selon la variante de la présente invention des figures 11 à 13 est encore plus efficace et performant que celui mesuré et représenté par la courbe C₈, du fait de son revêtement de matériau absorbant acoustique hydrophobe.

Ainsi, le principe et les différents modes de réalisation de la présente invention permettent d'évacuer les condensats d'un climatiseur de véhicule automobile avec un pouvoir insonorisant nettement accru par rapport aux dispositifs connus de l'art antérieur.

De plus, la présente invention permet d'évacuer l'eau condensée en permanence grâce à une forte section du débit sur toute la longueur de tube ou de trajet sans risque de bouchon et sans rétention d'eau.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Système d'insonorisation destiné aux évacuations des condensats d'un climatiseur de véhicule automobile, placé entre l'évaporateur (1) du climatiseur et une sortie des condensats sur l'extérieur,
constitué de plusieurs parois , de façon à créer un chemin labyrinthique qui, dans un espace relativement compact, entraîne un trajet relativement long pour les ondes acoustiques du bruit provenant de l'extérieur par ladite sortie des condensats, **caractérisé en ce que** lesdits parois sont des parois circulaires ajourées concentriques (10,11,12,13;22,23,24).

2. Système d'insonorisation selon la revendication 1, **caractérisé en ce qu'**il est intégré au corps creux (2) du carter du climatiseur, dans la partie inférieure dudit carter.

3. Système d'insonorisation selon la revendication 1, **caractérisé en ce que** lesdites parois (10, 11, 12, 13 ; 22, 23, 24 ; 45) sont recouvertes par un couvercle (6 ; 20 ; 47) dont la face interne est revêtue d'une couche (14 ; 25 ; 46) d'un matériau absorbant acoustique.

4. Système d'insonorisation selon la revendication 3, **caractérisé en ce que** ledit matériau absorbant acoustique est un matériau hydrophobe.

5. Système d'insonorisation selon l'une quelconque des revendications **3 et 4, caractérisé en ce qu'**il est constitué :
- d'une partie supérieure comprenant un couvercle (20) revêtu d'une couche de matériau absorbant et la paroi circulaire de plus grand diamètre (24) de l'ensemble de parois formant labyrinthe, et
- d'une partie inférieure (21), liée au carter du climatiseur, comprenant les autres parois circulaires (22, 23) de l'ensemble de parois formant labyrinthe et l'orifice d'évacuation des condensats (26) vers l'extérieur.

6. Système d'insonorisation selon la revendication **1, caractérisé en ce que** le nombre de parois circulaires ajourées concentriques (10, 11, 12, 13) est de quatre.

7. Système d'insonorisation selon la revendication **1, caractérisé en ce que** le nombre de parois circulaires ajourées concentriques (22, 23, 24) est de trois.

8. Système d'insonorisation selon l'une quelconque des revendications 1 à **7, caractérisé en ce qu'**il est prévu, de plus, un ou plusieurs revêtements absorbants complémentaires (33, 34) à l'intérieur du carter (2) du climatiseur, de façon à améliorer le système d'isolation acoustique.

9. Système d'insonorisation selon la revendication **1, caractérisé en ce qu'**il est intégré à un boîtier spécifique (40) situé hors du carter (2) du climatiseur, ledit boîtier (40) étant relié audit carter (2) par une tubulure de raccordement (41).

10. Système d'insonorisation selon la revendication **9, caractérisé en ce qu'**il est constitué :
- d'une partie supérieure ou couvercle (47) dont la surface interne est revêtue d'une couche de matériau absorbant hydrophobe (46), et
- d'une partie inférieure comprenant un orifice de sortie de l'eau (43) et un ensemble de parois (45) formant un chemin de type labyrinthe qui, dans un espace relativement compact, fait suivre un trajet relativement long aux ondes acoustiques du bruit provenant de l'extérieur par l'orifice de sortie des condensats (43).

11. Système d'insonorisation selon l'une quelconque des revendications **4, 8 et 10, caractérisé en ce que** le matériau absorbant acoustique hydrophobe peut être un matériau à fibres de type thinsulate ®.

## Claims

1. Sound proofing system intended for the condensate discharge for a motor vehicle air-conditioning system situated between the evaporator (1) of the air-conditioning system and a condensate outlet to the outside, formed in such a way as to create a labyrinthine path which, within relatively compact space, forces the sound waves of the noise coming from the outside along the said condensate outlet to follow a relatively long path, **characterized in that** the said walls are concentric perforated circular walls (10, 11, 12, 13; 22, 23, 24).

2. Sound proofing system according to Claim 1, **characterized in that** it is incorporated into the hollow body (2) of the casing of the air-conditioning system, in the lower part of the said casing.

3. Sound proofing system according to Claim 1, **characterized in that** the said walls (10, 11, 12, 13; 22, 23, 24; 45) are covered by a cover (6; 20; 47) the interior face of which is lined with a layer (14; 25; 46) of an acoustically absorbent material.

4. Sound proofing system according to Claim 3, **characterized in that** the said acoustically absorbent material is a hydrophobic material.

5. Sound proofing system according to either one of Claims 3 and 4, **characterized in that** it consists:
- of an upper part comprising a cover (20) lined with a layer of absorbent material and the largest-diameter circular wall (24) of the set of walls that form the labyrinthine, and
- of a lower part (21) casing of the air-conditioning system and comprising the other circular walls (22, 23) of the set of walls that form the labyrinthine and the orifice (26) for discharging condensate to the outside.

6. Sound proofing system according to Claim 1, **characterized in that** the number of concentric perforated circular walls (10, 11, 12, 13) is four.

7. Sound proofing system according to Claim 1, **characterized in that** the number of concentric perforated circular walls (22, 23, 24) is three.

8. Sound proofing system according to any one of Claims 1 to 7, **characterized in that** in addition there are one or more additional absorbent linings (33, 34) inside the casing (2) of the air-conditioning system, so as to improve the system of acoustic insulation.

9. Sound proofing system according to Claim 1, **characterized in that** it is incorporated into a special housing (40) situated outside of the casing (2) of the air-conditioning system, the said housing (40) being connected to the said casing (2) by a connecting tube (41).

10. Sound proofing system according to Claim 9, **characterized in that** it consists:
- of an upper part or cover (47) the internal surface of which is lined with a layer of hydrophobic absorbent material (46) and
- of a lower part comprising a water discharge orifice (43) and a set of walls (45) that form a path of the labyrinthine type which, in a relatively compact space, forces the sound waves of the noise coming in from outside through the condensate outlet orifice (43) to follow a relatively long path.

11. Sound proofing system according to any one of Claims 4, 8 and 10, **characterized in that** the hydrophobic acoustically absorbent material may be a fibrous material of the thinsulate ® type.

## Patentansprüche

1. Schalldämpfungssystem, das für die Kondensatableitungen einer Kraftfahrzeug-Klimaanlage bestimmt ist, zwischen dem Verdampfer
(1) der Klimaanlage und einem Kondensataustritt nach außen angeordnet ist und aus mehreren Wänden besteht, um einen Labyrinthweg zu erzeugen, der in einem relativ kompakten Raum zu einer relativ langen Strecke für die Schallwellen des von außen über den Kondensataustritt kommenden Geräuschs führt, **dadurch gekennzeichnet, dass** die Wände konzentrische kreisförmige Lochwände (10, 11, 12, 13; 22, 23, 24) sind.

2. Schalldämpfungssystem nach Anspruch 1, **dadurch gekennzeichnet, dass** es in den Hohlkörper (2) des Kastens der Klimaanlage im unteren Bereich des Kastens integriert ist.

3. Schalldämpfungssystem nach Anspruch 1, **dadurch gekennzeichnet, dass** die Wände (10, 11, 12, 13; 22, 23, 24; 45) von einem Deckel (6; 20; 47) bedeckt werden, dessen Innenseite mit einer Schicht (14; 25; 46) eines schalldämmenden Werkstoffs beschichtet ist.

4. Schalldämpfungssystem nach Anspruch 3, **dadurch gekennzeichnet, dass** der schalldämmende Werkstoff ein hydrophober Werkstoff ist.

5. Schalldämpfungssystem nach einem der Ansprüche 3 und 4, **dadurch gekennzeichnet, dass** es besteht aus:
- einem oberen Teil, der einen mit einer Schicht aus schalldämmendem Werkstoff beschichteten Deckel (20) und die kreisförmige Wand mit dem größten Durchmesser (24) der Gruppe von ein Labyrinth bildenden Wänden enthält, und
- einem mit dem Kasten der Klimaanlage verbundenen unteren Teil (21), der die anderen kreisförmigen Wände (22, 23) der Gruppe von ein Labyrinth bildenden Wänden und die Ableitungsöffnung der Kondensate (26) nach außen enthält.

6. Schalldämpfungssystem nach Anspruch 1, **dadurch gekennzeichnet, dass** die Anzahl von konzentrischen kreisförmigen Lochwänden (10, 11, 12, 13) vier ist.

7. Schalldämpfungssystem nach Anspruch 1, **dadurch gekennzeichnet, dass** die Anzahl von konzentrischen kreisförmigen Lochwänden (22, 23, 24) drei ist.

8. Schalldämpfungssystem nach einem der Ansprüche 1 bis 7, **dadurch gekennzeichnet, dass** außerdem eine oder mehrere komplementäre schalldämmende Beschichtungen (33, 34) innerhalb des Kastens (2) der Klimaanlage vorgesehen sind, um das Schallisolationssystem zu verbessern.

9. Schalldämpfungssystem nach Anspruch 1, **dadurch gekennzeichnet, dass** es in ein spezifisches Gehäuse (40) integriert ist, das sich außerhalb des Kastens (2) der Klimaanlage befindet, wobei das Gehäuse (40) mit dem Kasten (2) über einen Anschlussstutzen (41) verbunden ist.

10. Schalldämpfungssystem nach Anspruch 9, **dadurch gekennzeichnet, dass** es besteht aus:
- einem oberen Teil oder Deckel (47), dessen Innenfläche mit einer Schicht aus einem hydrophoben schalldämmenden Werkstoff (46) beschichtet ist, und
- einem unteren Teil, der eine Wasseraustrittsöffnung (43) und eine Gruppe von Wänden (45) aufweist, die einen labyrinthartigen Weg formen, der in einem relativ kompakten Raum die Schallwellen des von außen über die Austrittsöffnung der Kondensate (43) kommenden Geräuschs über eine relativ lange Strecke gehen lässt.

11. Schalldämpfungssystem nach einem der Ansprüche 4, 8 und 10, **dadurch gekennzeichnet, dass** der hydrophobe schalldämmende Werkstoff ein Werkstoff mit Fasern vom Typ Thinsulate® sein kann.
